(19) Europäisches Patentamt / European Patent Office / Office européen des brevets

(11) **EP 2 980 145 B1**

## (12) EUROPEAN PATENT SPECIFICATION

(45) Date of publication and mention
of the grant of the patent:
**28.02.2018 Bulletin 2018/09**

(21) Application number: **14776551.5**

(22) Date of filing: **28.03.2014**

(51) Int Cl.:
***C08J 9/18*** *(2006.01)*     ***C08J 9/232*** *(2006.01)*
*C08L 23/12* *(2006.01)*     *C08L 25/06* *(2006.01)*

(86) International application number:
**PCT/JP2014/059224**

(87) International publication number:
**WO 2014/157647 (02.10.2014 Gazette 2014/40)**

## (54) COMPOSITE RESIN PARTICLES AND FOAMABLE COMPOSITE RESIN PARTICLES, PRE-FOAMED RESIN PARTICLES, AND MOLDED FOAM BODY USING SAME

VERBUNDHARZPARTIKEL UND SCHÄUMBARE VERBUNDHARZPARTIKEL, VORGESCHÄUMTE HARZPARTIKEL UND GEFORMTER SCHAUMSTOFFKÖRPER DARAUS

PARTICULES DE RÉSINE COMPOSITE ET PARTICULES DE RÉSINE COMPOSITE EXPANSIBLES, PARTICULES DE RÉSINE PRÉ-EXPANSÉES, ET CORPS EN MOUSSE MOULÉ LES UTILISANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.03.2013 JP 2013073416**

(43) Date of publication of application:
**03.02.2016 Bulletin 2016/05**

(73) Proprietor: **Sekisui Plastics Co., Ltd.
Osaka-shi, Osaka 530-0047 (JP)**

(72) Inventor: **OZAWA, Masahiko
Koka-shi
Shiga 528-0056 (JP)**

(74) Representative: **Hoffmann Eitle
Patent- und Rechtsanwälte PartmbB
Arabellastraße 30
81925 München (DE)**

(56) References cited:
**JP-A- 2001 302 837     JP-A- 2010 222 546
JP-A- 2011 074 152**

**Description**

TECHNICAL FIELD

The present invention relates to composite resin particles, and foamable (expandable) composite resin particles, pre- foamed (pre- expanded) resin particles, and a moleded article thereof (an expanded molded article thereof). More specifically, the present invention relates to composite expanded particles that have excellent chemical resistance, thermal resistance, and bending strength, that have a good shelf life of the expanded particles when a blowing agent is included, and that have excellent expansion moldability with the capability of energy-saving molding, and expandable composite resin particles, pre-expanded particles, and an expanded molded article thereof.

BACKGROUND TECHNOLOGY

Since expanded molded articles including a polystyrene-based resin as a thermoplastic resin component have excellent cushioning, rigidity, thermal insulation properties, lightweight properties, water resistance, expansion moldability, and the like, they have conventionally been widely utilized as cushioning materials for packaging, heat insulation materials for building materials, structural members for vehicles, and the like.

In general, expanded molded articles of a polystyrene-based resin, although having excellent rigidity, have the problem of inferior impact resistance and chemical resistance.

On the other hand, since expanded molded articles of a polypropylene-based resin have excellent impact resistance and chemical resistance, they are utilized in vehicle-related components.

However, polypropylene-based resins have inferior retention of the blowing gas, and thus it is necessary to precisely control the molding conditions in order to obtain the expanded molded article thereof, which leads to the problem of increase in production costs. Also, expanded molded articles of a polypropylene-based resin also have the problem of inferior rigidity compared to expanded molded articles of a polystyrene-based resin.

Thus, in order to solve such aforementioned problems, expanded molded articles obtained by complexing a polystyrene-based resin having good rigidity and expansion moldability, and a polypropylene-based resin having good chemical resistance and impact resistance have been proposed.

For example, PCT International Publication No. WO 2007/099833 (Patent Document 1), for the purpose of providing a styrene-modified polypropylene-based resin expanded molded article having excellent mechanical characteristics, chemical resistance, and the like, proposes styrene-modified polypropylene-based resin particles containing 30 parts by mass or more and less than 600 parts by mass of a polystyrene-based resin with respect to 100 parts by mass of a polypropylene-based resin, wherein polystyrene-based resin having a particle diameter of 5 $\mu$m or less exist in a dispersed state within the polypropylene-based resin.

Also, PCT International Publication No. WO 2008/117504 (Patent Document 2), for the purpose of providing a carbon black-containing modified polystyrene-based resin molded article having excellent chemical resistance, thermal resistance, expansion moldability, and the like, and having self-extinguishing properties, proposes carbon black-containing modified polystyrene-based resin particles containing 100 parts by mass or more and less than 400 parts by mass of a polystyrene-based resin with respect to 100 parts by mass of a carbon black-containing polypropylene-based resin, wherein the polystyrene-based resin ratio at a central part of the particle calculated by the absorbance ratio at 698 cm$^{-1}$ and 1,376 cm$^{-1}$ obtained from an infrared absorption spectrum of the central part of the particles measured by ATR infrared spectroscopic analysis is 1.2 times or more the proportion of the polystyrene-based resin in the entire particle.

Furthermore, Japanese Unexamined Patent Application, First Publication No. 2010-270284 (Patent Document 3), for the purpose of providing a styrene-modified polyethylene-based resin expanded molded article that can be molded at low temperature, that is, can be made by energy-saving molding, and has high oil resistance, proposes a styrene-modified polyethylene-based resin expanded molded article having an absorbance ratio at 698 cm$^{-1}$ and 2,850 cm$^{-1}$ obtained from an infrared absorption spectrum of the expanded molded article surface measured by ATR-FTIR exceeding 2.5 and 11.0 or less.

PRIOR ART DOCUMENTS

Patent Documents

Patent Document 1: PCT International Publication No. WO 2007/099833
Patent Document 2: PCT International Publication No. WO 2008/117504
Patent Document 3: Japanese Unexamined Patent Application, First Publication No. 2010-270284

## SUMMARY OF THE INVENTION

### PROBLEM TO BE SOLVED BY THE INVENTION

However, the aforementioned prior art have the following problems.

The styrene-modified polypropylene-based resin particles of Patent Document 1, since polystyrene-based resin with a particle diameter of 5 $\mu$m or less is dispersed in the polypropylene-based resin, although having excellent chemical resistance, are not capable of energy-saving molding.

The carbon black-containing modified polystyrene-based resin particles of Patent Document 2, since the proportion of polystyrene-based resin in the central part of the particles 1.2 times or more the proportion of polystyrene-based resin in the entire particle, although having excellent chemical resistance and thermal resistance, are not capable of energy-saving molding.

The styrene-modified polyethylene-based resin expanded molded article of Patent Document 3, since the absorbance ratio at 698 cm$^{-1}$ and 2,850 cm$^{-1}$ exceeds 2.5 and is 11.0 or less, although being capable of molding at low temperature (energy-saving molding) and also having excellent oil resistance, since polystyrene-based resin greatly exists in the surface area, shelf life of expanded particles is short and also, since polyethylene-based resin is used, thermal resistance is inferior.

Thus, the present invention has the problem of providing composite resin particles that have excellent chemical resistance, thermal resistance, and bending strength, that have a good shelf life of expanded particles when a blowing agent is included, that have excellent expansion moldability with the capability of energy-saving molding, and expandable composite resin particles, pre-expanded particles, and an expanded molded article thereof.

### MEANS FOR SOLVING THE PROBLEM

The inventor of the present invention, as a result of earnest research in order to solve the aforementioned problem, has found that in composite resin particles including 100 to 400 parts by mass of a polystyrene-based resin with respect to 100 parts by mass of a polypropylene-based resin, if the surface area section and the outermost surface area section thereof are both in a state in which polystyrene-based resin of a specific particle diameter is dispersed in the polypropylene-based resin and the ratio of the absorbance derived from the polystyrene-based resin and the absorbance derived from the polypropylene-based resin obtained from the infrared absorption spectrum of the composite resin particle surface is within a specific range, the aforementioned problem can be solved, thus leading to completion of the present invention.

Thus, in accordance with the present invention, composite resin particles comprising a polypropylene-based resin and a polystyrene-based resin, wherein

the content of the polystyrene-based resin is 100 to 400 parts by mass with respect to 100 parts by mass of the polypropylene-based resin,

a surface area section, being a section from exceeding 0.2 $\mu$m from the surface of the composite resin particle to 1.0 $\mu$m from the surface of the composite resin particle, is in a state in which the polystyrene-based resin with a particle diameter of 0.3 $\mu$m or less is dispersed in the polypropylene-based resin,

an outermost surface area section, being a section from the surface of the composite resin particles to 0.2 $\mu$m from the surface of the composite resin particles, is in a state in which the polystyrene-based resin with a particle diameter of 0.3 to 1.5 $\mu$m is dispersed in the polypropylene-based resin, and

an absorbance ratio of an absorbance taken at 698 cm$^{-1}$ derived from the polystyrene-based resin (D698) and an absorbance taken at 1,376 cm$^{-1}$ derived from the polypropylene-based resin (D1376) obtained from an infrared absorption spectrum of the surface of the composite resin particles (D698/D1376) is 0.5 to 2.5 are provided.

Also, in accordance with the present invention, expandable composite resin particles comprising the aforementioned composite resin particles and a blowing agent are provided.

Furthermore, in accordance with the present invention, pre-expanded particles obtained by expanding the aforementioned composite resin particles are provided.

Also, in accordance with the present invention, an expanded molded article obtained by expansion molding the aforementioned pre-expanded particles, wherein

a surface area section, being a section from exceeding 0.2 $\mu$m from a surface of the expanded molded article to 1.0 $\mu$m from the surface of the expanded molded article, is in a state in which the polystyrene-based resin with a particle long diameter of 0.5 $\mu$m or less is dispersed in the polypropylene-based resin, and

an outermost surface area section, being a section from the surface of the expanded molded article to 0.2 $\mu$m from the surface of the expanded molded article, is in a state in which the polystyrene-based resin with a particle long diameter of 0.5 to 2.5 $\mu$m is dispersed in the polypropylene-based resin is provided.

EFFECTS OF THE INVENTION

In accordance with the present invention, composite resin particles that have excellent chemical resistance, thermal resistance, and bending strength, that have a good shelf life of expanded particles when a blowing agent is included, and that have excellent expansion moldability with the capability of energy-saving molding, and expandable composite resin particles, pre-expanded particles, and an expanded molded article thereof can be provided.
Also, the composite resin particles of the present invention, if carbon black is contained as a coloring agent, exhibit the aforementioned effects as well as can impart design properties to the expanded molded article.

BRIEF DESCRIPTION OF THE DRAWINGS

Figure 1(a) is a TEM image of the outermost surface area section and the surface area section of the composite resin particles of Example 1, and Figure 1(b) is a TEM image of the inner area of the composite resin particles of Example 1.
Figure 2(a) is a TEM image of the outermost surface area section and the surface area section of the expanded molded article of Example 1, and Figure 2(b) is a TEM image of the inner area of the expanded molded article of Example 1.
Figure 3(a) is a TEM image of the outermost surface area section and the surface area section of the composite resin particles of Comparative Example 2, and Figure 3(b) is a TEM image of the inner area of the composite resin particles of Comparative Example 2.
Figure 4(a) is a TEM image of the outermost surface area section and the surface area section of the expanded molded article of Comparative Example 2, and Figure 4(b) is a TEM image of the inner area of the expanded molded article of Comparative Example 2.
Figure 5 (a) is a TEM image of the outermost surface area section and the surface area section of the composite resin particles of Comparative Example 3, and Figure 5(b) is a TEM image of the inner area of the composite resin particles of Comparative Example 3.
Figure 6(a) is a TEM image of the outermost surface area section and the surface area section of the expanded molded article of Comparative Example 3, and Figure 6(b) is a TEM image of the inner area of the expanded molded article of Comparative Example 3.

BEST MODE FOR CARRYING OUT THE INVENTION

(1) Composite Resin Particles

The composite resin particles of the present invention are characterized by:

being composite resin particles comprising a polypropylene-based resin and a polystyrene-based resin;
having a content of the polystyrene-based resin of 100 to 400 parts by mass with respect to 100 parts by mass of the polypropylene-based resin;
having a surface area section, being the section from exceeding 0.2 $\mu$m from the surface of the composite resin particle to 1.0 $\mu$m from the surface of the composite resin particle, in a state in which the polystyrene-based resin with a particle diameter of 0.3 $\mu$m or less is dispersed in the polypropylene-based resin;
having an outermost surface area section, being the section from the surface of the composite resin particles to 0.2 $\mu$m from the surface of the composite resin particles, in a state in which the polystyrene-based resin with a particle diameter of 0.3 to 1.5 $\mu$m is dispersed in the polypropylene-based resin; and
having an absorbance ratio of an absorbance taken at 698 cm$^{-1}$ derived from the polystyrene-based resin (D698) and an absorbance taken at 1,376 cm$^{-1}$ derived from the polypropylene-based resin (D1376) obtained from an infrared absorption spectrum of the surface of the composite resin particles (D698/D1376) is 0.5 to 2.5.

In the present invention, "surface area section" refers to the distance (depth) from the surface of the composite resin particles and the expanded molded article in the range of from exceeding 0.2 $\mu$m to 1.0 $\mu$m.
Also, "outermost surface area section" refers to the distance (depth) from the surface of the composite resin particles and the expanded molded article in the range of to 0.2 $\mu$m.
Furthermore, "inner area" refers to the center (at least 1/5 more on the inner said from the circle center) of the cut face by dividing a composite resin particle in half. In the case of the expanded molded article, refers to the center (at least 1/5 more on the inner said from the circle center) of the expanded particles forming the cut face by dividing the expanded molded article in half.

In the present invention, the distance (depth) from the surface expressing the surface area section and the outermost surface area section of the composite resin particles, and the particle diameter of the polystyrene-based resin of the composite resin particles, as specifically explained in the examples, can be confirmed by expanding to a magnification (for example, 1,000 to 10,000 times) for which the aforementioned distance and particle diameter can be measured using, for example, a transmission electron microscope and made visual with the photograph transferred from the display device thereof or the display image thereof.

(a) Dispersed State of Polystyrene-Based Resin in Surface Area Section and Outermost Surface Area Section of Composite Resin Particles

The surface area section of from exceeding 0.2 $\mu$m from the surface of the composite resin particles to 1.0 $\mu$m from the surface of the composite resin particles is in a state in which the polystyrene-based resin with a particle diameter of 0.3 $\mu$m or less is dispersed in the polypropylene-based resin, and

the outermost surface area section of from the surface of the composite resin particles to 0.2 $\mu$m from the surface of the composite resin particles is in a state in which the polystyrene-based resin with a particle size of 0.3 to 1.5 $\mu$m is dispersed in the polypropylene-based resin.

Herein, "particle diameter" means the particle diameter of the longest part of the polystyrene-based resin dispersed in the polypropylene-based resin included in the composite resin particles, and "particle long diameter" means the particle diameter of the longest part of the polystyrene-based resin in a stretched state included in the composite resin expanded molded article.

The aforementioned "particle diameter", from being the particle diameter of the polystyrene-based resin dispersed in the polypropylene-based resin, is also referred to as "dispersed diameter" in the present specification.

Also, the aforementioned "particle long diameter", from being the particle diameter of the polystyrene-based resin dispersed in the polypropylene-based resin in a stretched state included in the composite resin expanded molded article, is also referred to as "dispersed long diameter" in the present specification.

If the particle diameter (dispersed diameter) of the polystyrene-based resin of the surface area section exceeds 0.3 $\mu$m, there is the concern that the shelf life of the expanded particles becomes shorter. Such dispersed diameter is, for example, 0.1, 0.15, 0.2, 0.25, and 0.3 $\mu$m.

Accordingly, the dispersed diameter of the polystyrene-based resin of the surface area section is preferably 0.1 to 0.3 $\mu$m and more preferably 0.1 to 0.2 $\mu$m.

When the particle diameter (dispersed diameter) of the polystyrene-based resin of the outermost surface area section is less than 0.3 $\mu$m, energy-saving molding may not be possible. On the other hand, when the dispersed diameter of the polystyrene-based resin of the outermost surface area section exceeds 1.5 $\mu$m, there is the concern that chemical resistance deteriorates. Such dispersed diameter is, for example, 0.3, 0.4, 0.5, 0.6, 0.7, 0.8, 0.9, 1.0, 1.1, 1.2, 1.3, 1.4, and 1.5 $\mu$m.

Accordingly, the dispersed diameter of the polystyrene-based resin of the outermost surface area section is preferably 0.3 to 1.3 $\mu$m and more preferably 0.3 to 1.0 $\mu$m. Also, the dispersed diameter preferably exceeds 0.3 $\mu$m.

The composite resin particles of the present invention thus have a polystyrene-based resin of a specific particle diameter in a dispersed state in the surface area section and the outermost surface area section thereof, and the dispersed diameter of the polystyrene-based resin in the surface area section is smaller than the dispersed diameter of the polystyrene-based resin in the outermost surface area section. This difference between the dispersed diameter in the surface area section and the dispersed diameter in the outermost surface area section is 0.2 to 1.2 $\mu$m and is, for example, 0.2, 0.3, 0.4, 0.5, 0.6, 0.7, 0.8, 0.9, 1.0, 1.1, and 1.2 $\mu$m. The difference is preferably 0.2 to 0.8 $\mu$m.

The dispersed state of the polystyrene-based resin in the surface area section and the outermost surface area section of the composite resin particles can be confirmed by, for example, tracing TEM photographs of the surface area and the outermost surface area section so that the surface area of each particle becomes almost equal and measuring the particle diameters one by one.

Specifically, this is described in detailed in "Examples".

(b) Absorbance Ratio of Composite Resin Particle Surface

The composite resin particles of the present invention, for example, as mentioned in detail in Example 1, have a structure in which the polypropylene-based resin richly exists at the surface (surface area section and outermost surface area section) of the composite resin particles and the polystyrene-based resin exists richly the further into the inner area of such particles.

It is considered that the effects of the present invention can be realized by the composite resin particles of the present invention having such inclined structure and a polystyrene-based resin having a specific particle diameter being dispersed in polypropylene-based resin in the surface.

That is, the composite resin particles have an absorbance ratio of the absorbance taken at 698 cm$^{-1}$ derived from the polystyrene based resin (D698) and the absorbance taken at 1,376 cm$^{-1}$ derived from the polypropylene-based resin (D1376) obtained from the infrared absorption spectrum of the surface thereof (D698/D1376) of 0.5 to 2.5.

For example, in composite resin particles prepared from the polystyrene-based resin and the polypropylene-based resin, an absorbance ratio of 0.5 means that presence of the polystyrene-based resin is about 10%, and an absorbance ratio of 2.5 means that the abundance of the polystyrene-based resin is about 42%.

The aforementioned absorbance ratio (D698/D1376) is, for example, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, and 2.5.

In addition, the absorbances D698 and D1376 are obtained from an infrared absorption spectrum and mean the height of the peak derived from the vibration of each resin component included in the composite resin particles.

Specifically, this is described in detailed in "Examples".

(c) Polypropylene-Based Resin

Although there are no particular limitations on the polypropylene-based resin included in the composite resin particles of the present invention, and resins obtained using conventional polymerization methods may be used, and other than polypropylene resin, a propylene-ethylene copolymer can be used, for example. This propylene-ethylene copolymer includes a copolymer of propylene and ethylene as the main component, but may also contain within the molecules other monomers capable of copolymerizing with the ethylene or propylene. As such monomers, one, or two or more monomers selected from α-olefins, cyclic olefins, and diene-based monomers can be mentioned.

In the present invention, a resin having a melting point in the range of from 120 to 145°C is preferable as the polypropylene-based resin. If the melting point of the polypropylene-based resin is less than 120°C, thermal resistance is poor and thermal resistance of the expanded molded article including a polypropylene-based resin produced using polypropylene-based resin particles may decrease. Also, if the melting point exceeds 145°C, the polymerization temperature increases and good polymerization may not be possible. Such melting point is, for example, 120, 125, 130, 135, 140, and 145°C.

(d) Polystyrene-Based Resin

There are no particular limitations as the polystyrene-based resin and, for example, homopolymers of a styrene-based monomer such as styrene, α-methylstyrene, vinyl toluene, chlorostyrene, ethylstyrene, isopropylstyrene, dimethylstyrene, and bromostyrene, or copolymers thereof can be mentioned.

Also, the polystyrene-based resin may be a copolymer of an aforementioned styrene-based monomer and a vinyl-based monomer copolymerizable with this styrene-based monomer. As such vinyl-based monomer, for example, alkyl (meth)acrylates such as methyl (meth)acrylate, ethyl (meth)acrylate, butyl (meth)acrylate, and cetyl (meth)acrylate; monofunctional monomers such as (meth)acrylonitrile, dimethyl maleate, dimethyl fumarate, diethyl fumarate, and ethyl fumarate; bifunctional monomers such as divinyl benzene and alkylene glycol dimethacrylate; and the like can be mentioned. In the present invention, (meth)acryl means acryl, methacryl, or combinations thereof.

The content of the polystyrene-based resin is 100 to 400 parts by mass with respect to 100 parts by mass of the polypropylene-based resin. By using such composite resin, an expanded molded article having the excellent properties of both a polypropylene-based resin and a polystyrene-based resin is possible.

If the content of the polystyrene-based resin is less than 100 parts by mass, the polystyrene-based resin is insufficient, and thus it may not be possible to obtain the desired expandability, and the rigidity of the expanded molded article obtained by secondary expansion of the pre-expanded particles may deteriorate. On the other hand, if the content of the polystyrene-based resin exceeds 400 parts by mass, the chemical resistance and the thermal resistance of the expanded molded article obtained by secondary expansion of the pre-expanded particles may deteriorate. The content of the polystyrene-based resin with respect to 100 parts by mass of the polypropylene-based resin is, for example, 100, 150, 200, 250, 300, 350, and 400 parts by mass.

Accordingly, the content of the polystyrene-based resin with respect to 100 parts by mass of the polypropylene-based resin is preferably 100 to 300 parts by mass and more preferably 100 to 250 parts by mass.

(e) Additives

In a range that does not impair the effects of the present invention, the composite resin particles of the present invention may include well-known additives such as flame retardants, flame retardant auxiliary agents, blowing auxiliary agents, plasticizers, lubricants, binding inhibitors, fusion accelerators, antistatic agents, spreaders, cell regulators, crosslinking agents, fillers, and coloring agents.

As flame retardants, tris(2,3-dibromopropyl) isocyanurate, bis[3,5-dibromo-4-(2,3-dibromopropoxy) phenyl] sulfone, tetrabromocyclooctane, hexabromocyclododecane, trisdibromopropylphosphate, tetrabromobisphenol A, tetrabromobisphenol A-bis(2,3-dibromo-2-methylpropyl ether), tetrabromobisphenol A-bis(2,3-dibromopropyl ether), and the like can be mentioned.

As flame retardant auxiliary agents, organic peroxides such as 2,3-dimethyl-2,3-diphenyl butane, 3,4-dimethyl-3,4-diphenyl hexane, dicumyl peroxide, and cumene hydroperoxide can be mentioned.

As blowing auxiliary agents, aromatic organic compounds such as styrene, toluene, ethylbenzene, and xylene; cyclic aliphatic hydrocarbons such as cyclohexane and methylcyclohexane; and solvents that have a boiling point of 200°C or less at 1 atm such as ethyl acetate and butyl acetate can be mentioned.

As plasticizers, phthalic acid esters; glycerin fatty acid esters such as glycerin diacetomonolaurate, glycerin tristearate, and glycerin diacetomonostearate; adipic acid esters such as diisobutyl adipate; and the like can be mentioned.

As lubricants, paraffin wax, zinc stearate, and the like can be mentioned.

As binding inhibitors, calcium carbonate, silica, zinc stearate, aluminum hydroxide, ethylene bis-stearic acid amide, calcium phosphate tribasic, dimethyl silicone, and the like can be mentioned.

As fusion accelerators, stearic acid, stearic acid triglycerides, hydroxystearic acid triglycerides, stearic acid sorbitan esters, polyethylene wax, and the like can be mentioned.

As antistatic agents, polyoxyethylene alkylphenol ethers, stearic acid monoglycerides, and the like can be mentioned.

As spreaders, polybutene, polyethylene glycol, silicon oil, and the like can be mentioned.

As cell regulators, ethylene bisstearic acid amides, polyethylene wax, and the like can be mentioned.

As crosslinking agents, organic peroxides such as 2,2-di-t-butyl peroxybutane, 2,2-bis(t-butylperoxy)butane, dicumyl peroxide, and 2,5-dimethyl-2,5-di-t-butyl peroxyhexane can be mentioned.

As fillers, synthetic or naturally-produced silicon dioxide and the like can be mentioned.

As coloring agents, carbon black such as furnace black, Ketchen black, channel black, thermal black, acetylene black, graphite, and carbon fiber; chromates such as chrome yellow, zinc yellow, and barium yellow; ferrocyanides such Prussian blue; sulfides such as cadmium yellow and cadmium red; oxides such as iron black and red oxide; inorganic-based pigments such as silicates like ultramarine blue and titanium oxide; organic-based pigments such as azo pigments such as monoazo pigments, disazo pigments, azo lakes, condensed azo pigments, and chelate azo pigments and polycyclic pigments such as phthalocyanine-based pigments, anthraquinone-based pigments, perylene-based pigments, perinone-based pigments, thioindigo-based pigments, quinacridone-based pigments, dioxazine-based pigments, isoindolinone-based pigments, and quinophthalone-based pigments can be mentioned.

Among the aforementioned additives, the composite resin particles of the present invention preferably contained carbon black as a coloring agent. The expanded molded article can be imparted design properties thereby.

The added amount of carbon black is about 1.0 to 2.5% by mass with respect to the aforementioned resin components. Such added amount of carbon black is, for example, 1.0, 1.5, 2.0, and 2.5% by mass.

(f) Production Method of Composite Resin Particles

There are no particular limitations as the production method of the composite resin particles and, for example, seed polymerization methods can be mentioned.

In general, seed polymerization methods can obtain composite resin particles by absorbing a monomer mixture into seed particles and carrying out polymerization of the monomer mixture after absorption or while absorbing. Also, expandable resin particles can be obtained by impregnating a below-mentioned blowing agent into composite resin particles after polymerization or while polymerizing.

In addition, if a flame retardant and a flame retardant auxiliary agent is contained in the resin particles, these may be added at the time of polymerization of the monomer mixture or may be impregnated into the composite resin particles after the completion of polymerization.

In the production method of composite resin particles by a seed polymerization method, for example, firstly, a monomer mixture including a styrene-based monomer is absorbed into the propylene-based resin particles as seed particles in an aqueous medium, and the composite resin particles are obtained by carrying out polymerization of the monomer mixture after absorption or while absorbing.

It is not necessary for all of the monomers constituting the monomer mixture to be simultaneously supplied to the aqueous medium, and all or a part of the monomers may supplied to the aqueous medium at different timings. If a flame retardant and a flame retardant auxiliary agent is contained in the composite resin particles, the flame retardant and flame retardant auxiliary agent may be added to the monomer mixture or the aqueous medium, or may be contained in the seed particles.

The propylene-based resin particles as seed particles are particles of the aforementioned polypropylene-based resin. The average particle diameter thereof can be appropriately adjusted according to the average particle diameter

7

of the expandable composite resin particles to be produced and the like.

The particle diameter of the seed particles is preferably in the range of from 0.5 to 1.5 mm and is more preferably in the range of from 0.6 to 1.0 mm. The average mass thereof is about from 30 to 90 mg/100 particles.

Also, as the shape thereof, spherical, oval (egg-shaped), columnar, prism-shaped, and the like can be mentioned.

The production method of the seed particles is not particularly limited and can be produced by a well-known method. For example, they can be obtained by a method in which the raw material resins are melted in an extruder and granulated, and then made into pellets by strand cutting, in-water cutting, hot cutting, or the like, or a method in which the resin particles are directly pulverized and pelleted by a pulverizer.

Also, the particles obtained by the aforementioned methods can be classified into particles of the desired average particle diameter by appropriately sifting. By using classified seed particles, expandable composite resin particles having the desired particles diameter with a narrow particle diameter distribution can be obtained.

As the aqueous medium, water, and a mixed medium of water and a water-soluble medium (for example, a lower alcohol such as methyl alcohol or ethyl alcohol) can be mentioned.

A dispersant may be used in the aqueous medium in order to stabilize the droplets of monomer mixture and dispersion properties of the seed particles. As such dispersant, for example, organic-based dispersants such as partially-saponified polyvinyl alcohol, polyacrylic acid salts, polyvinyl pyrrolidone, carboxymethyl cellulose, and methyl cellulose; and inorganic-based dispersants such as magnesium pyrophosphate, calcium pyrophosphate, calcium phosphate, calcium carbonate, magnesium phosphate, magnesium carbonate, and magnesium hydroxide can be mentioned. Among these, inorganic-based dispersants are preferable since it is possible to maintain a more stable dispersed state.

In the case of using an inorganic-based dispersant, it is preferable to use in combination with a surfactant. As such surfactant, for example, sodium dodecyl benzenesulfonate, sodium $\alpha$-olefinsulfonate, and the like can be mentioned.

Stirring conditions adjusted so that the stirring required power (Pv) necessary to stir 1 $m^3$ of aqueous medium including the propylene-based resin particles, the styrene-based monomer, and other dispersed products and dissolved products according to necessity becomes 0.06 to 0.8 kw/$m^3$ are preferable. The stirring required power is preferably 0.1 to 0.5 kw/$m^3$. This stirring required power corresponds to the energy per net unit volume which the contents in a reaction vessel have received by stirring.

Herein, the stirring required power refers to the power measured as outlined below.

That is, the aqueous medium containing the polypropylene-based resin particles, the styrene-based monomer, and other dispersed products and dissolved products according to necessity is supplied to the polymerization vessel of a polymerization apparatus, and then a stirring blade is rotated at a predetermined rotation frequency to stir the aqueous medium. At this time, the rotation driving load necessary for rotating the stirring blade is measured as a current value $A_1$ (amperes). The value obtained by multiplying an effective voltage (volts) by this current value $A_1$ is $P_1$ (watts).

Then, in the state where the polymerization vessel is empty, the stirring blade of the polymerization apparatus is rotated at the same rotation frequency as that mentioned above, and a rotation driving load necessary for rotating the stirring blade is measured as a current value $A_2$ (amperes).

The value obtained by multiplying an effective voltage (volts) by this current value $A_2$ is $P_2$ (watts). The stirring required power can be calculated by the equation below. V ($m^3$) is the volume of the entire aqueous medium including the polypropylene-based resin particles, the styrene-based monomer, and other dispersed products and dissolved products according to necessity.

$$\text{Stirring required power } (Pv) = (P_1 - P_2)/V$$

The shape and the structure of the polymerization vessel are not particularly limited as long as they have been conventionally used in the polymerization of styrene-based monomers.

Also, the stirring blade is not particularly limited as long as the stirring required power can be set in a predetermined range.

Specifically, paddle blades such as V-type paddle blades, inclined paddle blades, flat paddle blades, pfaudler blades, and brumargin blades; turbine blades such as turbine blade and fan turbine blades; propeller blades like marine propeller blades; and the like can be mentioned. Among these stirring blades, paddle blades are preferable, and V-type paddle blades, inclined paddle blades, flat paddle blades, pfaudler blades, and brumargin blades are more preferable. The stirring blade may be a single stage blade or a multiple stage blade.

In addition, the size of the stirring blade is not particularly limited as long as the stirring required power can be set in a predetermined range.

Furthermore, a baffle may be provided in the polymerization vessel.

Polymerization of the monomer mixture can be carried out, for example, by heating at 60 to 150°C for 2 to 40 hours. The polymerization can be carried out after the monomer mixture has been absorbed into the seed particles or while absorbing the monomer mixture into the seed particles. In addition, the amounts of the monomer and the resin are roughly equal.

The monomer mixture is normally polymerized in the presence of a polymerization initiator. The polymerization initiator is normally impregnated simultaneously into the seed particles with the monomer mixture.

The polymerization initiator is not particularly limited as long as it has been conventionally used in the polymerization of styrene-based monomers. For example, organic peroxides such as benzoyl peroxide, t-butylperoxy benzoate, t-butylperoxy pivalate, t-butylperoxy-2-ethylhexyl monocarbonate, t-butylperoxy isopropyl carbonate, t-butylperoxyacetate, 2,2-t-butylperoxybutane, t-butylperoxy-3,3,5-trimethyl hexanoate, di-t-butylperoxy hexahydroterephthalate, 2,5-dimethyl-2,5-bis(benzoylperoxy) hexane, and dicumyl peroxide can be mentioned. These polymerization initiators may be used alone or by combining two or more thereof. The used amount of polymerization initiator is, for example, in the range of from 0.1 to 5 parts by mass with respect to 100 parts by mass of the monomer mixture.

In order for the polymerization initiator to be uniformly absorbed into the seed particles or the particles growing from the seed particles, when adding the polymerization initiator to the aqueous medium, it is preferably added to a dispersion in which the polymerization initiator has been suspended or emulsion dispersed in advance in the aqueous medium, or added to an aqueous medium after dissolving the polymerization initiator in the monomer mixture or any monomer of the monomer mixture in advance.

The composite resin particles of the present invention can be obtained by polymerizing the styrene-based monomer in at least two stages and appropriately adjusting the polymerization conditions when doing so. Specifically, the styrene-based monomer is added at a temperature at which the polymerization initiator does not disperse and maintained in the range of from the 10-hour half-life temperature of the polymerization initiator (T1) T1 to T1+15°C, further the first polymerization is carried out in the range of from the melting point of the polypropylene-based resin (T2) T2-5°C to T2+10°C, and then the second polymerization is carried out.

(2) Expandable Composite Resin Particles

The expandable composite resin particles of the present invention include the composite resin particles of the present invention and a blowing agent.

Specifically, the expandable composite resin particles of the present invention can be obtained by impregnating a blowing agent into composite resin particles of the present invention. The impregnation of the blowing agent may be carried out while polymerizing the resin monomer or may be carried out after polymerization, by a well-known method.

For example, the impregnation during polymerization can be carried out by carrying out the polymerization reaction in a sealed vessel and feeding under pressure the blowing agent to the vessel. Also, impregnation after the completion of polymerization can be carried out by feeding under pressure the blowing agent in the sealed vessel.

The conditions when impregnating may be appropriately set by the type of composite resin particles and blowing agent, the physical properties of the expandable composite resin particles to be obtained, and the like.

For example, if the temperature when impregnating is low, the time necessary for impregnating the blowing agent into the composite resin particles increases, and thus production efficiency may deteriorate. On the other hand, if the temperature when impregnating is high, combined particles may occur by cohesion of composite resin particles. Accordingly, the temperature when impregnating is preferably in the range of from 50 to 80°C and is more preferably in the range of 60 to 70°C.

As the blowing agent, there are no particular limitations and any well-known blowing agent can be used. In particular, an organic compound that has a melting point below the softening point of the polystyrene-based resin and that is a gas or liquid at ambient pressure is suitable.

For example, hydrocarbons such as propane, n-butane, isobutane, n-pentane, isopentane, neopentane, cyclopentane, cyclopentadiene, n-hexane, and petroleum ethers; ketones such as acetone and methylethylketone; alcohols such as methanol, ethanol, isopropyl alcohol; low boiling point ether compounds such as dimethylether, diethylether, dipropylether, methylethylether; and inorganic gases such as carbon dioxide gas, nitrogen, and ammonia can be mentioned. These blowing agents may be used alone or by combining two or more types.

Among these, from the viewpoint of suppressing change over time of the expanded molded article by quickly substituting with air, hydrocarbons are preferable, hydrocarbons having a boiling point of -45 to 40°C are more preferable, and propane, n-butane, isobutane, n-pentane, isopentane, and the like are particularly preferable.

The content of the blowing agent is not particularly limited and is preferably in the range of from 7 to 15% by mass. The content of the blowing agent is, for example, 7, 8, 9, 10, 11, 12, 13, 14, and 15% by mass and is more preferably in the range of from 7 to 12% by mass.

If the content of the blowing agent is less than 7% by mass, it may not be possible to obtain pre-expanded particles of the desired density from the expandable composite resin particles. Also, since the effect of increasing the secondary expansion power when expansion molding in a die decreases, the appearance of the expanded molded article may not be good. On the other hand, if the content of the blowing agent exceeds 15% by mass, the time necessary for the cooling step in the production operation of the expanded molded article increases, and thus productivity may decrease.

In a range that does not impair the effects of the present invention, the blowing agent may be combined with a known blowing auxiliary agent and a known plasticizer. As such blowing auxiliary agent and plasticizer, for example, diisobutyl adipate, toluene, cylcohexane, ethylbenzene, and the like can be mentioned.

(3) Pre-Expanded Particles

The pre-expanded particles (also simply referred to as "expanded particles") of the present invention can be obtained by expanding the expandable composite resin particles of the present invention.

Specifically, the expanded particles of the present invention can be obtained by expanding the expandable composite resin particles to a desired bulk density using superheated steam.

The expanded particles can be used as is for uses such as a cushion filler material and also, can be used as a raw material of expanded molded articles for in-die expanding. If used as a raw material of expanded molded articles, normally, the expanded particles are referred to as "pre-expanded particles" and the expansion for obtaining such is referred to as "pre-expansion".

The bulk density of the expanded particles is preferably in the range of from 0.018 to 0.050 g/cm$^3$.

If the bulk density of the expanded particles is less than 0.018 g/cm$^3$, by shrinkage occurring in the obtained expanded molded article, the appearance may not be good and also, the thermal insulation performance and the mechanical strength of the expanded molded article may deteriorate. On the other hand, if the bulk density of the expanded particles exceeds 0.050 g/cm$^3$, the lightweight properties of the expanded molded article may deteriorate. Such bulk density of the expanded particles is, for example, 0.018, 0.020, 0.025, 0.030, 0.035, 0.040, 0.045, and 0.050 g/cm$^3$.

In addition, powder metal soaps such as zinc stearate may be coated on the surface of the expandable composite resin particles before expansion. By such coating, combining of expandable composite resin particles in the expansion step can be reduced.

(4) Expanded Molded Article

The expanded molded article of the present invention is characterized by: being obtained by expansion molding the pre-expanded particles of the present invention; having a surface area section, being a section from exceeding 0.2 $\mu$m from the surface of the expanded molded article to 1.0 $\mu$m from the surface of the expanded molded article, in a state in which the polystyrene-based resin with a particle long diameter of 0.5 $\mu$m or less is dispersed in the polypropylene-based resin; and having an outermost surface area section, being a section from the surface of the expanded molded article to 0.2 $\mu$m from the surface of the expanded molded article, is in a state in which the polystyrene-based resin with a particle long diameter of 0.5 to 2.5 $\mu$m is dispersed in the polypropylene-based resin. The particle long diameter preferably exceeds 0.5 $\mu$m.

The dispersed state of the polystyrene-based resin in the surface area section and the outermost surface area section of the expanded molded article, other than by making the particle diameter the particle long diameter, can be similarly confirmed as the dispersed state of the polystyrene-based resin in the surface area section and the outermost surface area section of the composite resin particles of the present invention.

Specifically, this is mentioned in detail in "Examples".

EXAMPLES

Hereinafter, although the present invention is specifically explained by examples and comparative examples, the examples below are merely exemplifications of the present invention, and thus the present invention is not limited to only the examples below.

In the examples and the comparative examples below, the obtained composite resin particles and expanded molded articles were evaluated as follows.

<Absorbance Ratio of Composite Resin Particle Surface (When Polypropylene-Based Resin)>

The absorbance ratio (D698/D1376) of the composite resin particle surface was measured in the following manner.

Each absorbance obtained from the infrared absorbance spectrum is referred to as the height of the peak derived from the vibration of each resin component included in the composite resin particles.

Infrared absorption spectra were obtained by carrying out surface analysis by an infrared spectroscopic analysis

**EP 2 980 145 B1**

ATR measurement method for 10 randomly selected particles. By such analysis, infrared absorption spectra were obtained in a depth range of from the sample surface to several μm (about 2 μm).

The individual absorption ratio (D698/D1376) was respectively calculated from each infrared absorption spectrum and the arithmetic average of the calculated individual absorbance ratios was taken as the absorbance ratio of the surface.

The polystyrene-based resin ratio (% by mass) was calculated from the absorbance ratio (D698/D1376) based on the below-mentioned calibration curve.

The absorbances D698 and D1376 were measured under the following conditions using a measurement apparatus with the product name "Fourier transform infrared spectrometer MAGNA560" manufactured by Nicolet and "Thunderdome" manufactured by Spectra-Tech as an ATR accessory.

(Measurement Conditions)

High refractive index crystal type: Ge (germanium)
Angle of incidence: 45°±1°
Measurement region: 4,000 cm$^{-1}$ to 675 cm$^{-1}$
Fraction dependence of measurement depth: Not corrected
Number of times of reflection: 1
Detector: DTGS KBr
Resolution: 4 cm$^{-1}$
Cumulated Number: 32
Other: The infrared absorption spectrum was measured without contacting with the sample under the aforementioned conditions, and this measured infrared absorption spectrum was used as the background. When measuring the sample, the measurement data was processed so that the background was not involved in the measurement spectrum. In an ATR method, the strength of the infrared absorption spectrum changes by the degree of adherence of the sample and the high refractive index crystals. For this reason, measurement was carried out by applying the maximum load that can be applied by the ATR accessory "Thunderdome" to make the degree of adherence roughly uniform.

The respective absorbances were determined by carrying out the following processes for the infrared absorption spectra obtained under the aforementioned conditions.

The absorbance D698 taken at 698 cm$^{-1}$ obtained from the infrared absorption spectra is the absorbance corresponding to the absorption spectrum derived from out-of-plane deformation vibration of the benzene ring included in the polystyrene-based resin. In measurement of this absorbance, peak separation was not carried out even when there was overlapping with another absorption spectrum at 698 cm$^{-1}$. The absorbance D698, using the straight line connecting 1,280 cm$^{-1}$ and 860 cm$^{-1}$ as the baseline, means the maximum absorbance between 710 cm$^{-1}$ and 685 cm$^{-1}$.

Also, the absorbance D1376 taken at 1,376 cm$^{-1}$ obtained from the infrared absorption spectra is the absorbance corresponding to the absorption spectrum derived from symmetrical deformation vibration in $CH_3$ of the -C-$CH_3$ hydrocarbon included in the polypropylene-based resin. In measurement of this absorbance, peak separation was not carried out even when there was overlapping with another absorption spectrum at 1,376 cm$^{-1}$. The absorbance D1376, using the straight line connecting 1,414 cm$^{-1}$ and 1,340 cm$^{-1}$ as the baseline, means the maximum absorbance between 1,400 cm$^{-1}$ and 1,350 cm$^{-1}$.

As the method for determining the composition ratio of the polystyrene-based resin and the polypropylene-based resin from the absorbance ratio, multiple kinds of standard samples in which the polystyrene-based resin and the polypropylene-based resin are uniformly mixed at a predetermined composition ratio were prepared and particle surface analysis by an ATR method infrared spectroscopic analysis was carried out for each standard sample to obtain an infrared absorption spectrum. The absorbance ratio was calculated from each measured infrared absorption spectrum. Then, by taking the composition ratio (ratio of polystyrene-based resin in standard sample (% by mass) as the vertical axis and the absorbance ratio (D698/D1376) as the horizontal axis, a calibration curve was drawn. Based on this calibration curve, the composition ratio of the polystyrene-based resin and the polypropylene-based resin in the composite resin particles of the present invention was determined from the absorbance ratio of the composite resin particles of the present invention.

In addition, the aforementioned calibration curved was approximated by the following equations.

- If D698/D1376<2.35:

$$Y = -2.5119X_1{}^2 + 22.966X_1$$

- If 10.0>(D698/D1376)>2.35:

$$Y = 27.591\text{Ln}\,(X_1) + 16.225$$

$X_1$ = (D698/D1376), Y = amount of polystyrene-based resin (%)

<Absorbance Ratio of Composite Resin Particle Surface (When Polyethylene-Based Resin)>

Other than measuring the absorbance ratio (D698/D2850) of the composite resin particle surface, this was carried out in the same manner as the polypropylene-based resin. The respective absorbances were determined by carrying out the following processes for the obtained infrared absorption spectra.

The absorbance D698 at 698 cm$^{-1}$ obtained from the infrared absorption spectra is the absorbance corresponding to the absorption spectrum derived from out-of-plane deformation vibration of the benzene ring included in the styrene-based resin. In measurement of this absorbance, peak separation was not carried out even when there was overlapping with another absorption spectrum at 698 cm$^{-1}$. The absorbance D698, using the straight line connecting 2,000 cm$^{-1}$ and 870 cm$^{-1}$ as the baseline, means the maximum absorbance between 710 cm$^{-1}$ and 685 cm$^{-1}$.

Also, absorbance D2850 at 2,850 cm$^{-1}$ obtained from the infrared absorption spectra is the absorbance corresponding to the absorption spectrum derived from symmetrical deformation vibration in $CH_2$ of the -C-$CH_2$ hydrocarbon included in the polyethylene-based resin. In measurement of this absorbance, peak separation was not carried out even when there was overlapping with another absorption spectrum at 2,850 cm$^{-1}$. The absorbance D2850, using the straight line connecting 3,125 cm$^{-1}$ and 2,720 cm$^{-1}$ as the baseline, means the maximum absorbance between 2,875 cm$^{-1}$ and 2,800 cm$^{-1}$.

As the method for determining from the absorbance ratio the composition ratio of the polystyrene-based resin and the polyethylene-based resin, multiple kinds of standard samples in which the polystyrene-based resin and the polyethylene-based resin are uniformly mixed at a predetermined composition ratio were prepared and particle surface analysis by an ATR method infrared spectroscopic analysis was carried out for each standard sample to obtain an infrared absorption spectrum. The absorbance ratio was calculated from each measured infrared absorption spectrum. Then, by taking the composition ratio (ratio of polystyrene-based resin in standard sample (% by mass)) as the vertical axis and the absorbance ratio (D698/D2850) as the horizontal axis, a calibration curve was drawn. Based on this calibration curve, the composition ratio of the polystyrene-based resin and the polyethylene-based resin in the composite resin particles of the present invention was determined from the absorbance ratio of the composite resin particles of the present invention.

In addition, the aforementioned calibration curved was approximated by the following equations.

- If D698/D2850<1.42:

$$Y = 21.112X_2$$

- If 1.42<(D698/D2850)<8.24:

$$Y = 28.415\text{Ln}\,(X_2) + 20.072$$

$X_2$ = (D698/D2850), Y = amount of polystyrene-based resin (%)

<Dispersed State of Polystyrene-Based Resin in Surface Area Section and Outermost Surface Area Section of Composite Resin Particles and Expanded Molded Article>

A piece was cut out from the composite resin particles and the expanded molded article. After encapsulating such piece within an epoxy resin, an ultrathin piece (70 nm thickness) was produced using ultramicrotome (manufactured by Leica Microsystems GmbH, product name: LEICA ULTRACUT UCT).

Subsequently, photographs of the ultrathin piece were taken with a transmission electron microscope (manufactured by Hitachi High-Technologies Corporation, H-7600) at 5,000 times magnification. The structures of the surface area section in the range of from exceeding 0.2 $\mu$m from the surface of the composite resin particles and the expanded molded article to 1.0 $\mu$m from the surface of the composite resin particles and the expanded molded article and the outermost surface area section in the range of from the surface of the composite resin particles and the expanded molded article to 0.2 $\mu$m from the surface of the composite resin particles and the expanded molded article were visually observed. Ruthenium tetroxide was used as a staining agent.

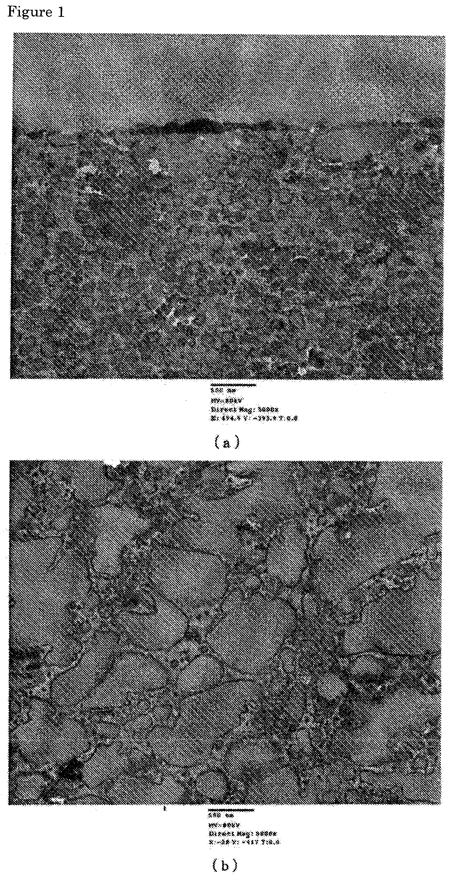

In the observation, the dispersed diameter and the dispersed long diameter of the polystyrene-based resin dispersed in the composite resin particles and the expanded molded article were confirmed by the following methods. That is, by tracing Figure 1(a) for example so that the particle area becomes roughly equal and measuring the dispersed diameters one by one, it was confirmed that the particle diameter (dispersed diameter) of the surface area section of the composite resin particles is 0.3 $\mu$m or less and the range of the particle diameter (dispersed diameter) of the outermost surface area section is from 0.3 to 1.5 $\mu$m, and the particle long diameter (dispersed long diameter) of the surface area section of the expanded molded article is 0.5 $\mu$m or less and the range of the particle long diameter (dispersed long diameter) of the outermost surface area section is from 0.5 to 2.5 $\mu$m.

<Rate of Dimensional Change on Heating>

The rate of dimensional change on heating was measured by a B method described in JIS K 6767: 1999 "Cellular Plastics-Polyethylene-Methods of Test".

After the obtained expanded molded article having a density 0.025 g/cm$^3$ was dried at a temperature of 50°C for 1 day, a sample piece of 150 x 150 x 30 mm (thickness) was cut out from this expanded molded article. In the central section thereof, three straight parallel lines were drawn respectively in vertical and horizontal directions so as to be 50 mm apart from each other, and then the sample piece was placed in a hot air circulation-type drier at 80°C for 168 hours. After being taken out therefrom and being allowed to stand for 1 hour in a place at 23°C±2°C and a humidity of 50%±5%, the rate of dimensional change on heating S (%) was calculated by the following equation using the dimensions of the vertical and horizontal lines.

$$S = (L1\text{-}L0)/L0 \times 100$$

In the equation, S represents the rate of dimensional change on heating (%), L1 represents the average dimensions (mm) after heating, and L0 represents the initial average dimensions (mm).

A rate of dimensional change on heating S (shrinkage rate) of 1.0% or less is taken as good.

<Rate of Dimensional Change With Respect to Molding Cavity>

Expanded molded articles were molded under the same conditions 7 days and 30 days after pre-expansion. The dimensions of a pre-determined part of the molding cavity were measured, the dimensions of the expanded molded article corresponding to such pre-determined part was measured, and the respective rates of dimensional change were determined from the following equations (1) and (2).

Rate of dimensional change with respect to molding cavity 7 day after pre-expansion $C_7$ (%)

= (Molding cavity dimensions-molded article dimensions)÷molding cavity dimensions×100 (1)

Rate of dimensional change with respect to molding cavity 30 days after pre-expansion $C_{30}$ (%)

= (Molding cavity dimensions-molded article dimensions)÷molding cavity dimensions×100 (2)

The difference $C_{30}$-$C_7$ of the obtained rates of dimensional change was evaluated based on the following standard.

O: $C_{30}$-$C_7$ is less than 0.3%
x: $C_{30}$-$C_7$ is 0.3% or more

<Chemical Resistance>

Three pieces of plate-like samples having a flat rectangular shape and a size of 100 mm length x 100 mm width x 20 mm thickness were cut from the expanded molded article. The samples were left to stand under the conditions of $23\pm2°C$ and a humidity of $50\pm5\%$ for 24 hours. In addition, the samples were cut from the expanded molded article so that the entire upper surface of each sample is formed of the surface of the expanded molded article.

Next, 1 g of different chemicals (gasoline, kerosene, dibutylphthalate (DBP)) was uniformly applied to the upper surfaces of the three samples and the samples were left to stand under the conditions of $23\pm2°C$ and a humidity of $50\pm5\%$ for 60 minutes. Subsequently, the chemicals were wiped off the upper surfaces of the sample pieces, and the upper surfaces of the samples were visually observed and evaluated based on the following standard.

○: good no change
Δ: slightly bad surface softening
x: bad surface cave in (shrinkage)

<Fusion Rate>

After cutting out a plate-like sample having a flat rectangular shape and a size of 400 mm length x 300 mm width x 30 mm thickness from the expanded molded article, and, inserting about a 5 mm deep cut in the surface thereof with a cutter along a straight line that connects the centers of a pair of long sides, the sample piece was split in half by hands along the cut line. Then, the expanded particles in the split surface of the halved molded article were counted for an arbitrary range of 100 to 150 particles with respect to (a) the number of expanded particles that are broken inside the particles and the number (b) of expanded particles that are broken at the boundary of the particles. The fusion rate (%) was calculated by the following equation.

$$F = (a)/[(a) + (b)] \times 100$$

If the fusion rate F was 80% or more, it was taken as good.

<Bending Strength of Expanded Molded Article>

The bending strength (average maximum bending strength) of the expanded molded article was measured in accordance with the method described in JIS K 7221-2: 2006 "Rigid Cellar Plastics".

5 rectangular parallelpiped sample pieces of 25 mm length x 130 mm width x 20 mm thickness (one surface skin lower side) were cut from the expanded molded article and left to stand under the conditions of $23°C\pm2°C$ and a humidity of $50\%\pm5\%$ for 24 hours. The bending strength of this sample piece was measured under the following conditions using a bending strength measurement device (manufactured by Orientech Co., Ltd.; model: UCT-10T)

(Measurement Conditions)

Test speed: 10 mm/min
Span: 100 mm
Deflection: 50 mm
Pressurization wedge: 5R
Support: 5R

The arithmetic average of the obtained results was taken as the bending strength, and was evaluated based on the following standard.

O: Bending strength is 0.3 MPa or more
x: Bending strength is less than 0.3 MPa

<Density of Expanded Molded Article>

The density of the expanded molded article was measured in accordance with the method described in JIS A 9511: 1995 "Preformed Cellular Plastics Thermal Insulation Materials".

The volume Va ($cm^3$) of the expanded molded article obtained after expansion molding and the mass thereof W (g) were measured, and the density (g/$cm^3$) of the expanded molded article was determined by the following equation.

$$\text{Density of expanded molded article (g/cm}^3) = W/Va$$

(Example 1)

17.88 kg of a polypropylene-based resin (manufactured by Prime Polymer Co., Ltd., product name: F-744NP, melting point: 140°C) and 2.22 kg of a carbon black master batch (manufactured by Dainichiseika Color & Chemicals Mfg. Co., Ltd., product name: PPRM-10H381, carbon black content of 45% by mass) were supplied to an extruder, and this mixture was fusion kneaded and granulated by an in-water cutting technique to obtain oval (egg-shaped) polypropylene-based resin particles containing 5.0% by mass of carbon black. The average mass of the obtained polypropylene-based resin particles was about 0.6 mg.

Next, 16 kg of the obtained polypropylene-based resin particles was inserted into a 100 L autoclave equipped with a stirrer, 40 kg of pure water as an aqueous medium, 400 g of magnesium pyrophosphate as a dispersant, and 10 g of sodium dodecyl benzenesulfonate as a surfactant were added thereto, and the mixture was then stirred to suspend the polypropylene-based resin particles in the aqueous medium. This was held for 10 minutes and then the temperature was raised to 60°C to obtain an aqueous suspension. The rotation frequency was adjusted so that hereinafter the stirring required power was maintained at 0.20 kw/$m^3$.

Next, 6.72 kg of a styrene monomer having 14 g of dicumyl peroxide as a polymerization initiator dissolved therein was added dropwise to the obtained aqueous suspension over 30 minutes. This was held for 30 minutes after the dropwise addition so that styrene monomer was absorbed into the polypropylene-based resin particles.

Next, the temperature of the reaction system was raised to 120°C and held thereat for 1 hour, the styrene monomer was polymerized while being absorbed into the polypropylene-based resin particles, and the temperature was raised to 140°C, which is the same as the melting point of the polypropylene-based resin particles, and held thereat for 2 hours to polymerize the styrene monomer in the polypropylene-based resin particles (first polymerization).

Next, the reaction liquid of the first polymerization was made 125°C, which is 15°C lower than the melting point of the polypropylene-based resin particles, and after adding 60 g of sodium dodecyl benzenesulfonate as a surfactant to this reaction liquid, 17.28 kg of a styrene monomer having 72 g of dicumyl peroxide as a polymerization initiator dissolved therein was added dropwise thereto over 4 hours, and the styrene monomer was polymerized while the styrene monomer was absorbed into the polypropylene-based resin particles (second polymerization).

After the dropwise addition, the temperature of the reaction system was held at 125°C for 1 hour and the temperature was further raised to 140°C and held thereat for 3 hours to complete the polymerization (mass ratio of polypropylene-based resin particles and styrene-based resin: 4/6).

Next, the reaction liquid was cooled to ambient temperature (30°C), about 40 kg of the composite resin particles was removed from the 100 L autoclave, and 400 mL of 20% hydrochloric acid was added thereto to remove the inorganic dispersant.

Then, using the obtained composite resin particles, the absorbance ratio of the surface thereof, and the dispersed state of the polystyrene-based resin in the surface area section and the outermost surface area section of the composite resin particles were measured.

Next, 2,000 g of the above composite resin particles (after removed), 2,000 g of water, and 2.0 g of sodium dodecyl benzenesulfonate were charged once again into a 5 L autoclave equipped with a stirrer, and 520 mL (300 g) of butane as a blowing agent was fed thereinto. After feeding, the temperature was raised to 70°C and stirring was continued for 4 hours.

Subsequently, the mixture was cooled to ambient temperature (30°C) and removed from the 5 L autoclave, and then dehydrated and dried to obtain 2,000 g of expandable composite resin particles.

Next, the obtained expandable composite resin particles were pre-expanded to a bulk density of 0.025 g/$cm^3$ to obtain 2,000 g of pre-expanded particles.

Next, after the obtained pre-expanded particles were left to stand at room temperature (23°C) for 1 day, the pre-expanded particles were filled into the molding cavity having a cavity of a size of 400 mm x 300 mm x 30 mm, and this was heated by introducing 0.18 MPa of steam for 20 seconds into the molding cavity. Subsequently, this was cooled until the maximum surface pressure of the expanded molded article was reduced to 0.001 MPa to obtain the expanded molded article.

By these molding conditions, an expanded molded article having a good appearance and fusion was obtained. The density of the obtained expanded molded article was 0.025 g/cm$^3$.

Then, using the obtained expanded molded article, the dispersed state of the polystyrene-based resin in the surface area section and the outermost surface area section thereof, the rate of change of the dimensions on heating, the chemical resistance, the fusion rate, and the bending strength were measured.

Also, regarding evaluation of the shelf life of the expanded particles, using expanded molded articles molded under the same conditions 7 days and 30 days after pre-expansion, the rate of dimensional change with respect to the molding cavity was measured.

Figure 1(a) is a TEM image of the outermost surface area section and the surface area section of the composite resin particles of Example 1, and Figure 1(b) is a TEM image of the inner area of the composite resin particles of Example 1.

By measuring each particle diameter one by one based on Figure 1, it was confirmed that the polystyrene-based resin with a particle diameter of 0.2 μm or less is in a dispersed state in the polypropylene-based resin in the surface area section of exceeding 0.2 μm from the surface of the composite resin particles to 1.0 μm from the surface of the composite resin particles and also, the polystyrene-based resin with a particle long diameter maximum value of 1.0 μm is in a dispersed state in the polypropylene-based resin in the outermost surface area section of from the surface of the composite resin particles to 0.2 μm from the surface of the composite resin particles.

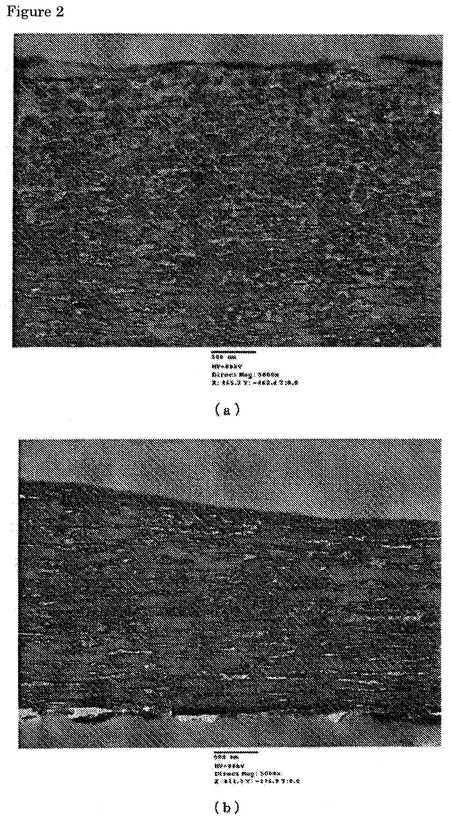

Figure 2(a) is a TEM image of the outermost surface area section and the surface area section of the expanded molded article of Example 1, and Figure 2(b) is a TEM image of the inner area of the expanded molded article of Example 1.

By measuring each particle diameter one by one based on Figure 2, it was confirmed that the polystyrene-based resin with a particle long diameter of 0.2 μm or less is in a dispersed state in the polypropylene-based resin in the surface area section of exceeding 0.2 μm from the surface of the composite resin particles to 1.0 μm from the surface of the composite resin particles and also, the polystyrene-based resin with a particle long diameter maximum value of 1.5 μm is in a dispersed state in the polypropylene-based resin in the outermost surface area section of from the surface of the composite resin particles to 0.2 μm from the surface of the composite resin particles.

(Example 2)

Other than using a temperature of 130°C and 1 hour as the holding conditions of the reaction system in the first polymerization, an expanded molded article was obtained, and the intermediate composite resin particles and the expanded molded article were evaluated in the same manner as Example 1.

(Example 3)

Other than not using carbon black; making the 16 kg of polypropylene-based resin particles 12 kg; in the first polymerization, making the 6.72 kg of styrene monomer 5.04 kg and the 14 g of dicumyl peroxide 10 g;, in the second polymerization, making the 17.28 kg of styrene monomer 22.96 kg and the 72 g of dicumyl peroxide 84 g; and making (mass ratio of polypropylene-based resin particles and styrene-based resin: 3/7), an expanded molded article was obtained, and the intermediate composite resin particles and the expanded molded article were evaluated in the same manner as Example 1.

(Example 4)

Other than, in the first polymerization, making the 14 g of dicumyl peroxide as the polymerization initiator 14 g of di-t-butylperoxide, and the holding conditions of the reaction system of a temperature of 120°C and 1 hour a temperature of 130°C and 1 hour, an expanded molded article was obtained, and the intermediate composite resin particles and the expanded molded article were evaluated in the same manner as Example 1.

(Example 5)

Other than making the 16 kg of polypropylene-based resin particles 20 kg; in the first polymerization, making the 6.72 kg of styrene monomer 8.40 kg and the 14 g of dicumyl peroxide 17 g; in the second polymerization, making the 17.28 kg of styrene monomer 11.60 kg and the 72 g of dicumyl peroxide 60 g; and making (mass ratio of polypropylene-based resin particles and styrene-based resin: 1/1), an expanded molded article was obtained, and the intermediate composite resin particles and the expanded molded article were evaluated in the same manner as Example 1.

(Example 6)

Other than making the 16 kg of polypropylene-based resin particles 8 kg; in the first polymerization, making the 6.72 kg of styrene monomer 3.36 kg and the 14 g of dicumyl peroxide 7 g; in the second polymerization, making the 17.28 kg of styrene monomer 28.64 kg and the 72 g of dicumyl peroxide 96 g; and making (mass ratio of polypropylene-based resin particles and styrene-based resin: 2/8), an expanded molded article was obtained, and the intermediate composite resin particles and the expanded molded article were evaluated in the same manner as Example 1.

(Comparative Example 1)

Other than using an ethylene-vinyl acetate copolymer (EVA, manufactured by Japan Polyethylene Corporation, product name: LV-115, melting point 105°C) instead of the polypropylene-based resin, polyethylene-based resin particles were obtained in the same manner as Example 1. The average mass of the obtained polyethylene-based resin particles was about 0.4 mg.

Next, other than using polyethylene-based resin particles instead of the polypropylene-based resin particles and making the stirring required power 1.05 kg/cm$^3$, an aqueous suspension was obtained in the same manner as Example 1.

Next, similar to Example 1, 6.72 kg of a styrene monomer having 14 g of dicumyl peroxide as a polymerization initiator dissolved therein was added dropwise to the obtained aqueous suspension over 30 minutes.

This was held for 30 minutes after the dropwise addition so that the styrene monomer was absorbed into the polyethylene-based resin particles.

Next, the temperature of the reaction system was raised to 130°C and held thereat for 2 hours to polymerize the styrene monomer in the polypropylene-based resin particles (first polymerization).

Next, the reaction liquid of the first polymerization was made 90°C, which is 15°C lower than the melting point of the polyethylene-based resin particles, and after adding 60 g of sodium dodecyl benzenesulfonate as a surfactant to this reaction liquid, 17.28 kg of a styrene monomer having 72 g of dicumyl peroxide as a polymerization initiator dissolved therein was added dropwise thereinto over 3 hours, and the styrene monomer was polymerized while the styrene monomer was absorbed into the polypropylene-based resin particles (second polymerization).

After the dropwise addition, the temperature of the reaction system was raised to 140°C and held thereat for 3 hours to complete the polymerization (mass ratio of polyethylene-based resin particles and styrene-based resin: 4/6).

Thereafter, other than introducing 0.10 MPa of steam for 20 seconds into the molding cavity, an expanded molded article was obtained, and the intermediate composite resin particles and the expanded molded article were evaluated in the same manner as Example 1.

(Comparative Example 2)

Other than not holding the reaction system at 120°C for 1 hour in the first polymerization, an expanded molded article was obtained, and the intermediate composite resin particles and the expanded molded article were evaluated in the same manner as Example 1.

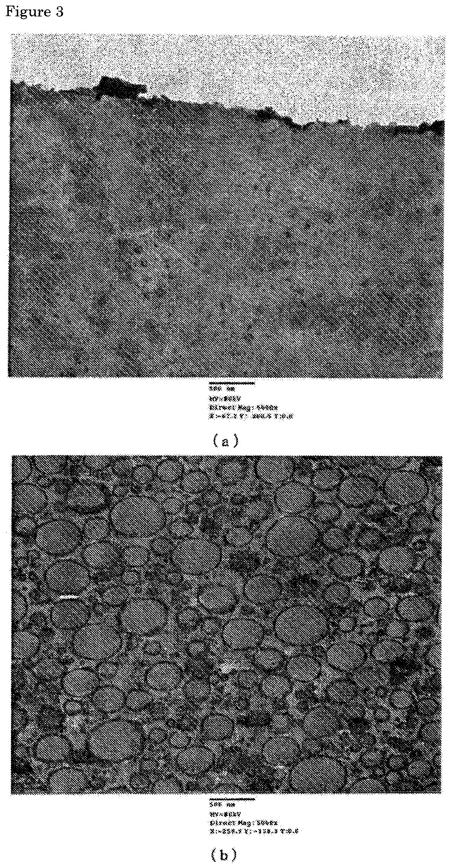

Figure 3(a) is a TEM image of the outermost surface area section and the surface area section of the composite resin particles of Comparative Example 2, and Figure 3(b) is a TEM image of the inner area of the composite resin particles of Comparative Example 2.

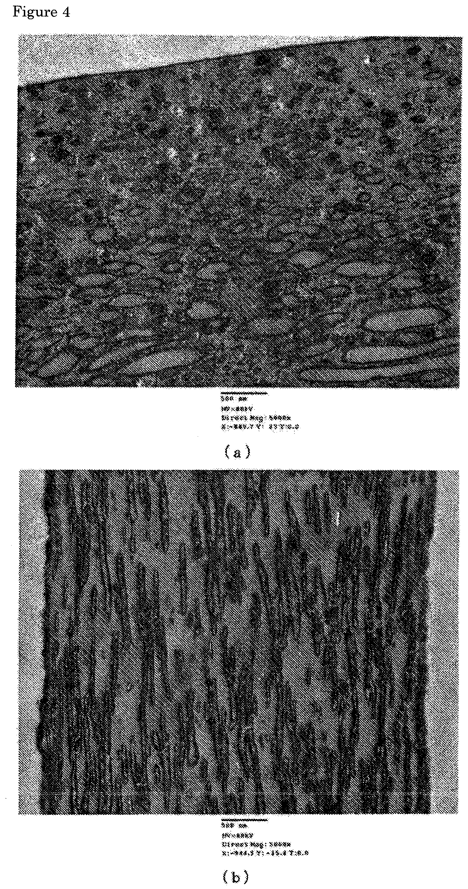

Figure 4(a) is a TEM image of the outermost surface area section and the surface area section of the expanded molded article of Comparative Example 2, and Figure 4(b) is a TEM image of the inner area of the expanded molded article of Comparative Example 2.

(Comparative Example 3)

Other than, in the first polymerization, changing the holding conditions of the reaction system from raising the temperature to 120°C and holding for 1 hour to raising the temperature to 135°C and holding for 1 hour, an expanded molded article was obtained, and the intermediate composite resin particles and the expanded molded article were evaluated in the same manner as Example 1.

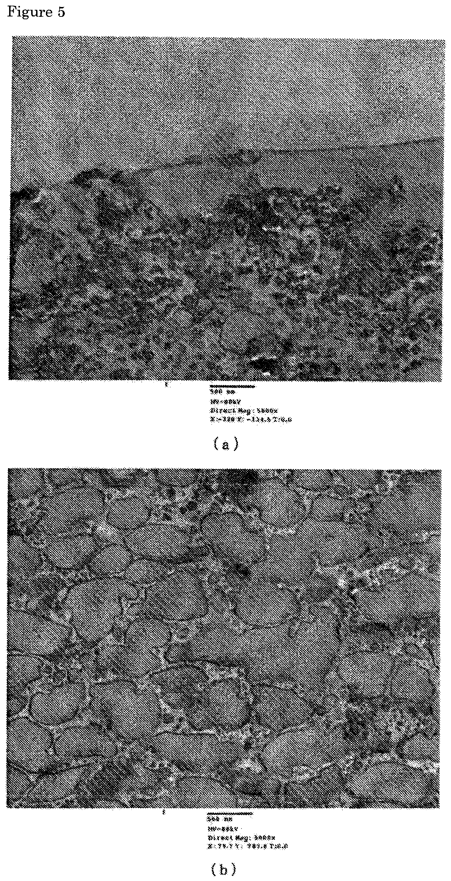

Figure 5 (a) is a TEM image of the outermost surface area section and the surface area section of the composite resin particles of Comparative Example 3, and Figure 5(b) is a TEM image of the inner area of the composite resin particles of Comparative Example 3.

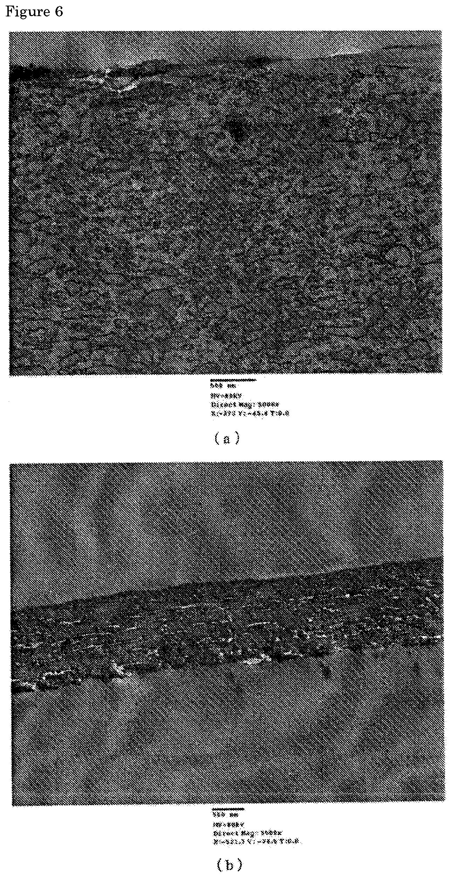

Figure 6(a) is a TEM image of the outermost surface area section and the surface area section of the expanded molded article of Comparative Example 3, and Figure 6(b) is a TEM image of the inner area of the expanded molded article of Comparative Example 3.

The results of Examples 1 to 6 and Comparative Examples 1 to 3 are shown summarized in Tables 1 and 2.

Table 1

| | Constitution Resin | | Composite Resin Particles | | | Expanded Molded Article | | |
|---|---|---|---|---|---|---|---|---|
| | PP or PE* Mass Ratio (Parts by Mass) | PS* Mass Ratio (Parts by Mass) | Absorbance Ratio (D698/D1376) of Surface** | PS Dispersed Diameter of Surface area Section ($\mu$m) | PS Dispersed Long Diameter Maximum Value of Outermost Surface area Section ($\mu$m) | PS Dispersed Diameter of Surface area Section ($\mu$m) | PS Dispersed Long Diameter Maximum Value of Outermost Surface area Section ($\mu$m) | Bending Strength |
| Determination Standard | (100) | (100 to 400) | 0.1 to 2.5 | 0.3 or less | 0.3 to 1.5 | 0.5 or less | 0.5 to 2.5 | 0.3 MPa or more |
| Example 1 | PP 4(100) | 6(150) | 1.3 | 0.2 | 1.0 | 0.2 | 1.5 | 0.32 |
| Example 2 | PP 4(100) | 6(150) | 1.3 | 0.2 | 1.3 | 0.2 | 1.8 | 0.33 |
| Example 3 | PP 3(100) | 7(233) | 1.5 | 0.2 | 0.6 | 0.2 | 0.6 | 0.33 |
| Example 4 | PP 4(100) | 6(150) | 1.8 | 0.2 | 0.6 | 0.3 | 0.8 | 0.34 |
| Example 5 | PP 1(100) | 1(100) | 1.2 | 0.2 | 0.4 | 0.2 | 0.7 | 0.32 |
| Example 6 | PP 2(100) | 8(400) | 2.4 | 0.3 | 1.5 | 0.4 | 2.5 | 0.34 |
| Comparative Example 1 | PE 4(100) | 6(150) | 3.0 | 0.3 | 0.3 | 0.3 | 0.3 | 0.27 |
| Comparative Example 2 | PP 4(100) | 6(150) | 1.2 | 0.3 | 0.1 | 0.3 | 0.1 | 0.25 |
| Comparative Example 3 | PP 4(100) | 6(150) | 2.0 | 0.4 | 3.0 | 0.4 | 3.5 | 0.31 |

* PP: Polypropylene-based resin particles, PE: Polyethylene-based resin particles, PS: Polystyrene-based resin (that inside parentheses shows the content of PP or PE, and PS) ** For Comparative Example 1 only, it was the absorbance ratio (D698/D2850) of the surface

Table 2

| | Shelf Life of Expanded Particles | | | | | | | | Rate of Dimensional Change With Respect to Molding Cavity $C_{30}$-$C_7$ |
|---|---|---|---|---|---|---|---|---|---|
| | Using Expanded Particles Produced 7 Days After Pre-Expansion | | | | Using Expanded Particles Produced 30 Days After Pre-Expansion | | | | |
| | Rate of Dimensional Change on Heating (%) | Chemical Resistance | Fusion Rate** (%) | Rate of Dimensional Change With Respect to Molding Cavity** C7 (%) | Rate of Dimensional Change on Heating (%) | Chemical Resistance | Fusion Rate** (%) | Rate of Dimensional Change With Respect to Molding Cavity** $C_{30}$ (%) | |
| Determination Standard | 1.0% or less | Change in appearance | 80% or more | - | 1.0% or less | Change in appearance | 80% or more | - | Within 0.3% |
| Example 1 | 0.8 | O | 90 | 0.7 | 0.9 | O | 85 | 0.9 | 0.2 |
| Example 2 | 0.8 | O | 90 | 0.7 | 0.9 | O | 90 | 0.9 | 0.2 |
| Example 3 | 0.8 | O | 90 | 0.7 | 0.9 | O | 90 | 0.8 | 0.1 |
| Example 4 | 0.8 | O | 90 | 0.7 | 0.9 | O | 90 | 0.9 | 0.2 |
| Example 5 | 0.8 | O | 90 | 0.7 | 0.9 | O | 90 | 0.9 | 0.2 |
| Example 6 | 0.8 | O | 90 | 0.7 | 0.9 | O | 90 | 0.8 | 0.1 |
| Comparative Example 1 | 2.5 | O | 100 | 0.8 | 2.7 | O | 100 | 1.2 | 0.4 |
| Comparative Example 2 | 0.8 | O | 60 | 0.7 | 1.1 | O | 50 | 0.8 | 0.1 |
| Comparative Example 3 | 0.9 | x | 90 | 0.7 | 0.9 | x | 90 | 0.8 | 0.1 |
| ** Molding conditions: In Examples 1 to 6 and Comparative Examples 2 and 3, the steam pressure was 0.18 MPa, in Comparative Example 1 only, the steam pressure was 0.10 MPa. | | | | | | | | | |

From the results of Tables 1 and 2, it is understood that the composite resin particles of Examples 1 to 6 have excellent chemical resistance, thermal resistance, and bending strength, and have excellent expansion moldability with the capability of energy-saving molding.

Also, from the results of Table 2, it is understood that the composite resin particles of Examples 1 to 6 having a good shelf life of expanded particles when a blowing agent is included.

## Claims

1. Composite resin particles comprising a polypropylene-based resin and a polystyrene-based resin, wherein
   a content of the polystyrene-based resin is 100 to 400 parts by mass with respect to 100 parts by mass of the polypropylene-based resin,
   a surface area section, being a section exceeding 0.2 $\mu$m from a surface of the composite resin particle to 1.0 $\mu$m from the surface of the composite resin particle, is in a state in which the polystyrene-based resin with a particle diameter of 0.3 $\mu$m or less is dispersed in the polypropylene-based resin,
   an outermost surface area section, being a section from the surface of the composite resin particles to 0.2 $\mu$m from the surface of the composite resin particles, is in a state in which the polystyrene-based resin with a particle diameter of 0.3 to 1.5 $\mu$m is dispersed in the polypropylene-based resin,
   the particle diameter referring to the longest part of the polystyrene-based resin dispersed in the polypropylene-based resin included in the composite resin particles, and being determined by TEM according to the section *"Dispersed State of Polystyrene-Based Resin in Surface Area Section and Outermost Surface Area Section of Composite Resin Particles and Expanded Molded Article"* of this specification; and
   an absorbance ratio of an absorbance taken at 698 cm$^{-1}$ derived from the polystyrene-based resin (D698) and an absorbance taken at 1,376 cm$^{-1}$ derived from the polypropylene-based resin (D1376) obtained from an infrared absorption spectrum of the surface of the composite resin particles is (D698/D1376) 0.5 to 2.5, the ratio being determined according to the section *"Absorbance Ratio of Composite Resin Particle Surface (When Polypropylene-Based Resin)'* of this specification.

2. The composite resin particles according to claim 1, wherein the composite resin particle contains carbon black as a coloring agent.

3. Expandable composite resin particles comprising the composite resin particles according to claim 1 and a blowing agent.

4. Pre-expanded particles obtained by expanding the expandable composite resin particles according to claim 3.

5. An expanded molded article obtained by expansion molding the pre-expanded particles according to claim 4, wherein
   a surface area section, being a section exceeding 0.2 $\mu$m from a surface of the expanded molded article to 1.0 $\mu$m from the surface of the expanded molded article, is in a state in which the polystyrene-based resin with a particle long diameter of 0.5 $\mu$m or less is dispersed in the polypropylene-based resin, and
   an outermost surface area section, being a section from the surface of the expanded molded article to 0.2 $\mu$m from the surface of the expanded molded article, is in a state in which the polystyrene-based resin with a particle long diameter of 0.5 to 2.5 $\mu$m is dispersed in the polypropylene-based resin,
   the particle long diameter referring to the longest part of the polystyrene-based resin dispersed in the polypropylene-based resin in a stretched state included in the expanded molded article, and being determined by TEM according to the section "Dispersed State of Polystyrene-Based Resin in Surface Area Section and Outermost Surface Area Section of Composite Resin Particles and Expanded Molded Article" of this specification.

## Patentansprüche

1. Verbundharzpartikel, umfassend ein Polypropylenbasiertes Harz und ein Polystyrol-basiertes Harz, wobei
   der Gehalt des Polystyrol-basierten Harzes 100 bis 400 Massenteile, bezogen auf 100 Massenteile des Polypropylen-basierten Harzes, beträgt,
   ein Oberflächenbereich, der ein Bereich ist, der sich von 0,2 $\mu$m von einer Oberfläche des Verbundharzpartikels bis 1,0 $\mu$m von der Oberfläche des Verbundharzpartikels erstreckt, sich in einem Zustand befindet, in dem das Polystyrol-basierte Harz mit einem Partikeldurchmesser von 0,3 $\mu$m oder weniger in dem Polypropylen-basierten Harz dispergiert ist,

ein äußerster Oberflächenbereich, der ein Bereich von der Oberfläche der Verbundharzpartikel bis 0,2 $\mu$m von der Oberfläche der Verbundharzpartikel ist, sich in einem Zustand befindet, in dem das Polystyrol-basierte Harz mit einem Partikeldurchmesser von 0,3 bis 1,5 $\mu$m in dem Polypropylen-basierten Harz dispergiert ist,

der Partikeldurchmesser sich auf den längsten Teil des in dem Polypropylen-basierten Harz dispergierten Polystyrol-basierten Harzes, das in den Verbundharzpartikeln enthalten ist, bezieht und mittels TEM gemäß dem Abschnitt "*Dispersed State of Polystyrene-Based Resin in Surface Area Section and Outermost Surface Area Section of Composite Resin Particles and Expanded Molded Article*" dieser Beschreibung bestimmt wird; und

ein Absorptionsverhältnis einer Absorption bei 698 cm$^{-1}$, die von dem Polystyrol-basierten Harz stammt (D698), und einer Absorption bei 1.376 cm$^{-1}$, die von dem Polypropylen-basierten Harz stammt (D1376), erhalten aus einem Infrarotabsorptionsspektrum der Oberfläche der Verbundharzpartikel, (D698/D1376) 0,5 bis 2,5 beträgt, wobei das Verhältnis gemäß dem Abschnitt "*Absorbance Ratio of Composite Resin Particle Surface (When Polypropylene-Based Resin)*" dieser Beschreibung bestimmt wird.

2. Verbundharzpartikel gemäß Anspruch 1, wobei der Verbundharzpartikel Ruß als Färbemittel enthält.

3. Expandierbare Verbundharzpartikel, umfassend die Verbundharzpartikel gemäß Anspruch 1 und ein Treibmittel.

4. Vorexpandierte Partikel, erhalten durch Expandieren der expandierbaren Verbundharzpartikel gemäß Anspruch 3.

5. Geschäumter Formgegenstand, erhalten durch Expansionsformen der vorexpandierten Partikel gemäß Anspruch 4, wobei

ein Oberflächenbereich, der ein Bereich ist, der sich von 0,2 $\mu$m von einer Oberfläche des geschäumten Formgegenstands bis 1,0 $\mu$m von der Oberfläche des geschäumten Formgegenstands erstreckt, sich in einem Zustand befindet, in dem das Polystyrol-basierte Harz mit einem Partikel-Langdurchmesser von 0,5 $\mu$m oder weniger in dem Polypropylen-basierten Harz dispergiert ist, und

ein äußerster Oberflächenbereich, der ein Bereich von der Oberfläche des geschäumten Formgegenstands bis 0,2 $\mu$m von der Oberfläche geschäumten Formgegenstands ist, sich in einem Zustand befindet, in dem das Polystyrol-basierte Harz mit einem Partikel-Langdurchmesser von 0,5 bis 2,5 $\mu$m in dem Polypropylen-basierten Harz dispergiert ist,

der Partikel-Langdurchmesser sich auf den längsten Teil des in dem Polypropylen-basierten Harz dispergierten Polystyrol-basierten Harzes im gedehnten Zustand, das in dem geschäumten Formgegenstand enthalten ist, bezieht und mittels TEM gemäß dem Abschnitt "*Dispersed State of Polystyrene-Based Resin in Surface Area Section and Outermost Surface Area Section of Composite Resin Particles and Expanded Molded Article*" dieser Beschreibung bestimmt wird.

## Revendications

1. Particules de résine composite comprenant une résine à base de polypropylène et une résine à base de polystyrène, dans lesquelles

une teneur en résine à base de polystyrène est de 100 à 400 parties en masse par rapport à 100 parties en masse de la résine à base de polypropylène,

une section d'aire surface, qui est une section dépassant 0,2 $\mu$m à partir d'une surface de la particule de résine composite à 1,0 $\mu$m de la surface de la particule de résine composite, est dans un état dans lequel la résine à base de polystyrène avec un diamètre de particule de 0,3 $\mu$m ou moins est dispersée dans la résine à base de polypropylène,

une section de surface la plus externe, qui est une section à partir de la surface des particules de résine composite à 0,2 $\mu$m à partir de la surface des particules de résine composite, est dans un état dans lequel la résine à base de polystyrène avec un diamètre de particule de 0,3 à 1,5 $\mu$m est dispersée dans la résine à base de polypropylène, le diamètre de particule se référant à la partie la plus longue de la résine à base de polystyrène dispersée dans la résine à base de polypropylène incluse dans les particules de résine composite, et étant déterminé par MET selon la section « *Dispersed State of Polystyrene-Based Resin in Surface Area Section and Outermost Surface Area Section of Composite Resin Particules and Expanded Molded Article* » de cette description ; et

un rapport d'absorbance d'une absorbance prise à 698 cm$^{-1}$ dérivée de la résine à base de polystyrène (D698) et une absorbance prise à 1376 cm$^{-1}$ dérivée de la résine à base de polypropylène (D1376) obtenu à partir d'un spectre d'absorption infrarouge de la surface des particules de résine composite est (D698/D1376) de 0,5 à 2,5, le rapport étant déterminé selon la section « *Absorbance Ratio of Composite Resin Particule Surface (When Polypropylene-Based Resin)* » de cette description.

2. Particules de résine composite selon la revendication 1, dans lesquelles la particule de résine composite contient du noir de carbone comme agent colorant.

3. Particules de résine composite expansibles comprenant les particules de résine composite selon la revendication 1 et un agent gonflant.

4. Particules pré-expansées obtenues en expansant les particules de résine composite expansibles selon la revendication 3.

5. Article moulé expansé obtenu par moulage par expansion des particules pré-expansées selon la revendication 4, dans lequel
une section d'aire de surface, étant une section dépassant 0,2 $\mu$m à partir d'une surface de l'article moulé expansé à 1,0 $\mu$m à partir de la surface de l'article moulé expansé, est dans un état dans lequel la résine à base de polystyrène avec un diamètre long de particule de 0,5 $\mu$m ou moins est dispersée dans la résine à base de polypropylène, et une section de surface la plus externe, qui est une section à partir de la surface de l'article moulé expansé à 0,2 $\mu$m de la surface de l'article moulé expansé, est dans un état dans lequel la résine à base de polystyrène avec un diamètre long de particule de 0,5 à 2,5 $\mu$m est dispersée dans la résine à base de polypropylène,
le diamètre long de particule se référant à la partie la plus longue de la résine à base de polystyrène dispersée dans la résine à base de polypropylène dans un état étiré incluse dans l'article moulé expansé, et étant déterminé par MET selon la section « *Dispersed State of Polystyrene-Based Resin in Surface Area Section and Outermost Surface Area Section of Composite Resin Particles and Expanded Molded Article* » de cette description.

Figure 1

(a)

(b)

Figure 2

(a)

(b)

Figure 3

(a)

(b)

Figure 4

(a)

(b)

Figure 5

（a）

（b）

Figure 6

(a)

(b)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007099833 A
- WO 2008117504 A
- JP 2010270284 A

**Non-patent literature cited in the description**

- Cellular Plastics-Polyethylene-Methods of Test. *JIS K 6767,* 1999
- Preformed Cellular Plastics Thermal Insulation Materials. *JIS A 9511,* 1995